# EUROPEAN PATENT APPLICATION

(11) **EP 2 717 211 A1**
(43) Date of publication of application: **09.04.2014**
(21) Application number: 12793921.3
(22) Date of filing: 27.01.2012
(51) Int. Cl.: G06Q 30/02, G06F 17/30, G09F 19/00

(54) **ADVERTISING SYSTEM, ADVERTISING SYSTEM CONTROL METHOD, PROGRAM, AND INFORMATION STORAGE MEDIUM**

(30) Priority: 31.05.2011 JP 2011122486
(71) Applicant: Rakuten, Inc., Tokyo 140-0002 (JP)
(72) Inventor: NAKAMURA, Kentaro, Tokyo 140-0002 (JP)
(74) Representative: EIP
(86) International application number: PCT/JP2012/051859
(87) International publication number: WO 2012/164967

(57) **Abstract**

An advertising system capable of efficiently providing an advertisement is provided. An information list acquisition unit (33) acquires all or part of a list of information stored in an information list storage unit (31) for storing the list of information. An advertisement subject selection unit (34) selects at least one piece of information of a plurality of pieces of information contained in the list of information stored in the information list storage unit (31), as an advertisement subject. A screen data generation unit (35) generates screen data of a screen including an advertisement area for displaying an advertisement of the information selected as the advertisement subject by the advertisement subject selection unit (34), and a list area for displaying the all or part of the list of information acquired by the information list acquisition unit. The advertisement subject selection unit (34) decideswhether or not the information is to be selected as the advertisement subject based on a rank of the information in the case where the all or part of the list of information stored in the information list storage unit (31) is sorted in a certain order.

## Description

### Technical Field

The present invention relates to an advertising system, a method of controlling an advertising system, a program, and an information storage medium.

### Background Art

There have been known various systems for providing a user with an advertisement. For example, in an e-commerce (electronic commerce) system for selling products (commodities), an advertisement area is provided on a screen for displaying a list of products that satisfy a search condition input by a user, and an advertisement for a product is displayed in the advertisement area (for example, Patent Literature 1).

### Citation List

### Patent Literature

[Patent Literature 1] JP 2008-287443 A

### Summary of the invention

### Technical Problem

An advertiser wishes to efficiently provide an advertisement. That is, the advertiser wishes to provide an advertisement only when the necessity of providing the advertisement is high, and refrain an advertisement when the necessity of providing the advertisement is low. However, in the conventional system, an advertisement is not efficiently provided in some cases. In the case of the above-mentioned e-commerce system, for example, since a product having a high display order in the product list is easily recognized by a user, the necessity of providing an advertisement for the product is low. However, in the conventional e-commerce system, an advertisement for such a product maybe displayed in the advertisement area in some cases. Further, in the case of the above-mentioned e-commerce system, since a product having a low display order in the product list is not easily recognized by the user, the necessity of providing an advertisement for the product is high. However, in the conventional e-commerce system, an advertisement for such a product may not be displayed in the advertisement area in some cases.

The present invention has been made in view of the above problem, and has an object to provide an advertising system, an advertising system control method, a program, and an information storage medium that are capable of efficiently providing an advertisement.

### Solution to Problem

In order to solve the above-mentioned problem, an advertising system according to the present invention includes: information list acquisition means for acquiring all or part of a list of information stored in information list storage means for storing the list of information; advertisement subject selection means for selecting at least one piece of information of a plurality of pieces of information contained in the list of information stored in the information list storage means, as an advertisement subject; and screen data generation means for generating screen data of a screen including an advertisement area for displaying an advertisement of the information selected as the advertisement subject by the advertisement subj ect selection means, and a list area for displaying the all or part of the list of information acquired by the information list acquisition means, wherein the advertisement subject selection means decides whether or not the information is to be selected as the advertisement subject, based on a rank of the information in the case where the all or part of the list of information stored in the information list storage means is sorted in a certain order.

Further, a method of controlling an advertising system according to the present invention includes: an information list acquisition step of acquiring all or part of a list of information stored in information list storage means for storing a list of information; an advertisement subject selection step of selecting at least one piece of information of a plurality of pieces of information contained in the list of information stored in the information list storage means, as an advertisement subject; and a screen data generation step of generating screen data of a screen including an advertisement area for displaying an advertisement of the information selected as the advertisement subject by the advertisement subject selection step, and a list area for displaying the all or part of the list of information acquired by the information list acquisition step, wherein the advertisement subject selection step decides whether or not the information is to be selected as the advertisement subject, based on a rank of the information in the case where the all or part of the list of information to be stored in the information list storage means is sorted in a certain order.

A program according to the present invention causes a computer to function as: information list acquisition means for acquiring all or part of a list of information stored in information list storage means for storing the list of information; advertisement subject selection means for selecting at least one piece of information of a plurality of pieces of information contained in the list of information stored in the information list storage means, as an advertisement subject; and screen data generation means for generating screen data of a screen including an advertisement area for displaying an advertisement of the information selected as the advertisement subject by the advertisement subject selection means, and a list area for displaying the all or part of the list of information acquired by the information list acquisition means, wherein the advertisement subject selection means decides whether or not the information is to be selected as the advertisement subject, based on a rank of the information in the case where the all or part of the list of information to be stored in the information list storage means is sorted in a certain order.

Further, an information storage medium according to the present invention is computer-readable information storage medium storing the above-mentioned program.

Further, according to one aspect of the invention, the all or part of the list of information acquired by the information list acquisition means may be displayed in the list area in a state where the all or part of the list of information acquired by the information list acquisition means is sorted in the certain order; and the advertisement subject selection means may decide whether or not the information is to be selected as the advertisement subject, based on a rank of the information in the case where the all or part of the list of information acquired by the information list acquisition means is sorted in the certain order.

Further, according to one aspect of the invention, the advertising system may further include key item acquisition means for acquiring an attribute item selected by a user as a key item from a plurality of attribute items, the all or part of the list of information acquired by the information list acquisition means may be displayed in the list area in a state where the all or part of the list of information acquired by the information list acquisition means is sorted using as the key item the attribute item acquired by the key item acquisition means; and the advertisement subject selection means may decide whether or not the information is to be selected as the advertisement subject, based on a rank of the information in the case where the all or part of the list of information stored in the information list storage means is sorted using as the key item a predetermined attribute item of the plurality of attribute items.

Further, according to one aspect of the invention, the advertising system may further include key item acquisition means for acquiring an attribute item selected by a user as a key item from a plurality of attribute items, the all or part of the list of information acquired by the information list acquisition means may be displayed in the list area in a state where the all or part of the list of information acquired by the information list acquisition means is sorted using as the key item the attribute item acquired by the key item acquisition means; and the advertisement subject selection means may include: consideration subject selection means for selecting at least one of the plurality of attribute items as a subject of consideration, based on selection information stored in selection information storage means for storing the selection information relating to a number of selections or a frequency of selections of each of the plurality of attribute items as the key item; and means for deciding whether or not the information is to be selected as the advertisement subject, based on a rank of the information in the case where the all or part of the list of information stored in the information list storage means is sorted using as the key item the attribute item selected as the subject of consideration.

Further, according to one aspect of the invention, the consideration subject selection means may not select an attribute item whose number of selections or frequency of selections as the key item is smaller than a predetermined threshold as the subject of consideration.

Further, according to one aspect of the invention, the advertisement subject selection means may include: means for deciding whether or not the information is to be selected as the advertisement subject based on probability information; means for determining whether or not the rank of the information is higher than a reference rank; and means for setting the probability information based on a result of determining whether or not the rank of the information is higher than the reference rank, and the probability information may be set so that a probability at which the information is to be selected as the advertisement subject in the case where the rank of the information is higher than the reference rank becomes lower than a probability at which the information is to be selected as the advertisement subject in the case where the rank of the information is lower than the reference rank.

Further, according to one aspect of the invention, a list of information each having a rank higher the reference rank, of the list of information acquired by the information list acquisition means, may be displayed in the list area as a part of the list of information acquired by the information list acquisition means.

Further, according to one aspect of the invention, the advertisement subject selection means may include: means for acquiring all or part of contents stored in means for storing a condition relating to a rank in association with the advertisement area; and means for determining whether or not the rank of the information satisfies the condition associated with the advertisement area, and the advertisement subject selection means may not select the information as the advertisement subject that corresponds to the advertisement area, in the case where the rank of the information satisfies the condition associated with the advertisement area.

Further, according to one aspect of the invention, the advertisement subject selection means may include: means for deciding whether or not the information is to be selected as the advertisement subject based on probability information; means for acquiring all or part of contents stored in means for storing a condition relating to a rank in association with the advertisement area; means for determining whether or not the rank of the information satisfies the condition associated with the advertisement area, and means for setting the probability information based on a result of determining whether or not the rank of the information satisfies the condition associated with the advertisement area, and the probability information may be set so that a probability at which the information is to be selected as the advertisement subject corresponding to the advertisement area in the case where the rank of the information satisfies the condition associated with the advertisement area becomes lower than a probability at which the information is to be selected as the advertisement subject corresponding to the advertisement area in the case where the rank of the information does not satisfy the condition associated with the advertisement area.

Further, according to one aspect of the invention, the advertising systemmay further include advertisement charge deciding means for deciding an amount of charge of an advertisement relating to the information, based on a number of times the advertisement of the information is displayed in the advertisement area, or a frequency of display of the advertisement of the information in the advertisement area.

Further, according to one aspect of the invention, the advertisement subject selection means may select, as advertisement subjects, a plurality of pieces of information of a plurality of pieces of information contained in the list of information stored in the information list storage means; the screen may include a first advertisement area and a second advertisement area displayed below the first advertisement area; and in the case where the plurality of pieces of information selected as the advertisement subject by the advertisement subject selection means includes first information and second information having a rank lower than that of the first information, the screen data generation means may display an advertisement of the first information in the second advertisement area, and display an advertisement of the second information in the first advertisement area.

### Advantageous Effects of Invention

According to the present invention, there becomes possible to efficiently placing the advertisements.

### Brief Description of Drawings

[FIG. 1] A diagram illustrating an overall configuration of an e-commerce system according to an embodiment of the present invention.
[FIG. 2] A diagram illustrating an example of a product list screen.
[FIG. 3] A functional block diagram of the e-commerce system according to the embodiment of the present invention.
[FIG. 4] A diagram illustrating an example of a product table.
[FIG. 5] A diagram illustrating an example of a selling product table.
[FIG. 6] A diagram illustrating an example of a transaction history table.
[FIG. 7] A diagram illustrating an example of a process which is executed in the e-commerce system.
[FIG. 8] A diagram illustrating an example of a selection frequency table.
[FIG. 9] A diagram illustrating another example of the product list screen.
[FIG. 10] A diagram illustrating an example of a reference rank table.

### Description of Embodiment

Hereinafter, an embodiment of the present invention will be described in detail with reference to the accompanying drawings. The description will be given of a case where the present invention is applied to an e-commerce system for implementing a virtual shopping mall where a plurality of shops are open. That is, the description will be given of an example of a case where an advertisement system according to the embodiment of the present invention is implemented in the e-commerce system.

FIG. 1 illustrates the overall configuration of an e-commerce system according to the embodiment of the present invention. As illustrated in FIG. 1, the e-commerce system 1 according to this embodiment includes a server 10, a database 12, a plurality of shop terminals 4, and a plurality of user terminals 6. The server 10, the plurality of shop terminal 4, and the plurality of user terminals 6 are connected to a communication network 2 including the Internet or the like, for example. The server 10 and the respective user terminals 6 can execute mutual data communication, the server 10 and the respective shop terminals 4 can execute mutual data communication.

For example, the server 10 is a virtual shopping mall server that serves as a portal for a virtual shopping mall. The server 10 executes processing based on a processing request received from a shop terminal 4 or a user terminal 6. For example, the server 10 includes a control unit (for example, a CPU or the like) for executing processing according to a program, a main memory unit (for example, a RAM or the like), an auxiliary storage unit (for example, a hard disk or a solid state drive), an optical disk drive for reading a program and data stored on an optical disk (an information storage medium), and a communication interface.

The control unit executes processing according to the program stored in the auxiliary storage unit. For example, the program and data are supplied to the auxiliary storage unit via the optical disk (the information storage medium). Specifically, the optical disk storing the program and data is mounted into the optical disk drive, and the program and data stored on the optical disk are read by the optical disk drive and stored in the auxiliary storage unit. The program and data may also be supplied to the auxiliary storage unit via an information storage medium (for example, a memory card) other than the optical disk. Further, the program and data may be supplied to the auxiliary storage unit via the communication network 2.

The server 10 can access the database 12. The database 12 stores, for example, data on users who use the virtual shopping mall, data on shops that open in the virtual shopping mall, data on products that are dealt in the virtual shopping mall, and data on a history of the transactions performed in the virtual shopping mall. The database 12 may be built in a server different from the server 10, or may be built in the server 10.

The shop terminal 4 is an information processing device provided in a shop which is open in the virtual shopping mall. The shop terminal 4 is, for example, a personal computer or the like. The shop terminal 4 is used to register information or the like on the products to be sold in the virtual shopping mall in the database 12 via the server 10. For example, a dedicated screen provided by the server 10 is displayed in the shop terminal 4.

The user terminal 6 is an information processing device which is operated by a user. The user terminal 6 is, for example, a personal computer, a cellular phone, a portable information terminal or the like. The user terminal 6 is used to purchase a product in the virtual shopping mall. For example, the user terminal 6 includes a control unit (for example, a CPU), a main memory unit (for example, a RAM), an auxiliary storage unit (for example, a hard disk or a solid state drive), a memory card slot, an operation unit, a display unit (for example, a liquid crystal display), a sound output unit (for example, a speaker), and a communication interface.

According to this embodiment, for example, an HTTP daemon is run in the server 10. Further, a browser is activated in the shop terminal 4 or user terminal 6, the shop terminal 4 or user terminal 6 transmits a processing request (HTTP request) to the server 10 via the browser. Further, the server 10 transmits a processing result (HTTP response) corresponding to the processing request to the shop terminal 4 or user terminal 6. For example, page data described in a web page description language is transmitted to the shop terminal 4 or user terminal 6. Then, based on the page data, a screen based on the processing result is displayed on the display unit of the shop terminal 4 or user terminal 6.

An example of a screen to be displayed on the display unit of the user terminal 6 in the case of using a virtual shopping mall will be described. When a user using the virtual shopping mall accesses the server 10 using the user terminal 6, front page data (top page data) of the virtual shopping mall is transmitted to the user terminal 6 from the server 10, the front screen (front page: not shown) of the virtual shopping mall is displayed on the display unit of the user terminal 6. The user searches for a desired product by selecting the category of the product, or searching products.

FIG. 2 illustrates an example of a product list screen displayed on the display unit when a user selects the category of a product, or searches for a product. FIG. 2 illustrates an example of a product list screen 20 which is displayed when the category "Television" is selected.

A list of products belonging to the category "Television" is shown in a list area 21 of the product list screen 20 illustrated in FIG. 2. The names of products, the prices thereof, and shops therefor, rating points are shown in the list area 21. The "Shop" indicates a shop that sells the product. The "Evaluation Value" is a numeral that indicates the result of evaluating the product by the user who purchased the product. For example, the user can input numerals "1" to "5" as the evaluation value for the purchased product. As the evaluation value gets higher, the evaluation of the product is higher. An average value of the evaluation values input by users who purchased the product is shown in the list area 21. The number of users who made the evaluation is shown in the list area 21 as "Number of Evaluating Persons" together with the "Evaluation Value".

In addition, a product name in the list area 21 is a link button. That is, link information to product page data indicating the details of a product is associated with the product name, so that when a user selects a product name, a product screen (product page: not shown) is displayed on the display unit. On the product screen, a user can perform procedures of purchasing a product, or check the evaluation results on the product by other users.

A keyword input field 22, price input fields 23 and 24, and a search button 25 are shown on the product list screen 20, allowing a user to input a refining condition (search condition) to narrow down the list of products.

The keyword input field 22 is a field for inputting a keyword. The price input fields 23 and 24 are fields for inputting the upper and lower limits of the price, respectively. When the search button 25 is selected, the list of products which satisfy the search condition is displayed in the list area 21. For example, when the user selects the search button 25 with a keyword input in the keyword input field 22, for example, a list of products such that the key word is included in the product page is displayed in the list area 21. Further, when the user selects the search button 25 with a price input in the price input field 23, for example, a list of products having a price equal to or higher than the input price is displayed in the list area 21. Similarly, when the user selects the search button 25 with a price input in the price input field 24, a list of products having a price equal to or lower than the input price is displayed in the list area 21.

A display order selection field 26 for selecting the display order is shown in the product list screen 20, so that a user can select the display order of the product list. On the product list screen 20 illustrated in FIG. 2, the user can select "Price (lower order : Low to High) ", "Price (higher order : High to Low) ", "Number of Sales Shops", "Sales", "Evaluation", or "Number of Views" as an attribute item to be a key item in case of sorting the list of products.

When the "Price (lower order)" or "Price (higher order)" is selected, a list of products that are sorted in the ascending or descending order of prices is shown in the list area 21. When the "Number of Sales Shops" is selected, a list of products that are sorted in the descending order of the number of shops that sell the product is shown in the list area 21. When the "Sales" is selected, a list of products that are sorted in the descending order of the number of sales in a target period (for example, recent one week) is shown in the list area 21.

When the "Evaluation" is selected, a list of products that are sorted in the descending order of evaluation values is shown in the list area 21. When the "Number of Views" is selected, a list of products that are sorted in the descending order of the number of times that the product screen (product page) has been viewed within the target period (for example, recent one week) is shown in the list area 21. A large number of times of viewing a product means that there are a large number of users who are interested in the product.

The maximum number of products that can be shown in the list area 21 is set in advance. The product list screen 20 illustrated in FIG. 2 is an example of the product list screen in a case where the maximum number of products is "10".

When the product list screen 20 is displayed as a result of selecting the category of a product, when the search button 25 is selected, or when the display order is selected in the display order selection field 26, a list of products having any one of the first to N-th (N: the above-mentioned maximum number) ranks among those products contained in the list of products is shown.

In a case of the product list screen 20 illustrated in FIG. 2, for example, there are 100 products belonging to the category "Television", and a list of products having any one of the first to tenth ranks among the 100 products is shown in the list area 21. It should be noted that a user can display next ten products in the list area 21 by selecting a button 27. That is, when the button 27 is selected in the state illustrated in FIG. 2, a list of products having any one of the eleventh to twentieth ranks is shown in the list area 21.

Hereinafter, the product list screen 20 on which a list of products having any one of the first to tenth ranks is shown will be described as "the first page of product list pages". Further, the product list screen 20 on which a list of products having any one of the eleventh to twentieth ranks is shown will be described as "the second page of product list pages".

As mentioned above, to view the second page or subsequent page of the product list pages (in other words, to view a list of products having a rank lower than the tenth), the user needs to select the button 27. Accordingly, products listed in the first page of the product list pages (i.e., products having any one of the first to tenth ranks) are likely to be spotted by the user, but products listed in the second or subsequent page of the product list pages (i.e., products having the rank lower than the tenth) are not easily spotted.

An advertising area 28 is provided on the product list screen 20. An advertisement of a product that is selected from among the products satisfying the search condition is shown in the advertising area 28. Each shop can select whether or not to provide an advertisement for each of products to be sold in the shop. An advertisement of a product selected by the shop as an advertisement product can be displayed in the advertisement area 28.

In a case of the product list screen 20 illustrated in FIG. 2, the list area 21 is provided below the advertisement area 28. The positional relationship between the list area 21 and the advertisement area 28 is set in such a way that a product having a lower rank in the list area 21 is displayed at a position farther from the advertisement area 28.

In the case of the product list screen 20 illustrated in FIG. 2, the advertisement area 28 includes a first advertisement area 28A and a second advertisement area 28B. Advertisements of products different from each other are displayed in the first advertising area 28A and the second advertising area 28B. The first advertisement area 28A is provided above the second advertisement area 28B on the product list screen 20, so that the first advertisement area 28A stands out more than the second advertisement area 28B.

The e-commerce system 1 is configured to efficiently provide an advertisement. In other words, when the necessity of providing the advertisement is low, the e-commerce system 1 refrains from providing the advertisement. Hereinafter, a description will be given of the configuration that implements such an advertising capability.

FIG. 3 is a functional block diagram illustrating functional blocks related to the present invention among the functional blocks that are implemented in the e-commerce system 1 according to the present embodiment. As illustrated in FIG. 3, the e-commerce system 1 includes a storage unit 30, a key item acquisition unit 32, an information list acquisition unit 33, an advertisement subject selection unit 34, and a screen data generation unit 35. For example, the storage unit 30 is implemented by the database 12. Further, the key item acquisition unit 32, the information list acquisition unit 33, the advertisement subject selection unit 34, and the screen data generation unit 35 are implemented by the server 10. That is, as the control unit of the server 10 executes processing according to a program, thereby functioning as these functional blocks.

First, the storage unit 30 will be described. The storage unit 30 stores various kinds of data. The storage unit 30 includes an information list storage unit 31. The information list storage unit 31 stores a list of information. In the case of this embodiment, the information list storage unit 31 stores a list of products. That is, in the case of this embodiment, the "list of products" corresponds to the "list of information".

FIGS. 4 to 6 illustrate examples of data stored in the storage unit 30. FIG. 4 illustrates an example of a product table. Common information on products that are dealt in the virtual shopping mall is registered in the product table. In other words, of information on products, information that does not depend on a shop selling the products is stored in the product table. The product table illustrated in FIG. 4 includes a "Product ID" field, a "Name" field, and a "Category" field. Identification information for uniquely identifying a product (product ID) is registered in the "Product ID" field. The name of the product is registered in the "Name" field. The category of the product is registered in the "Category" field.

FIG. 5 illustrates an example of a selling product table. Information on the products which are sold in each shop in the virtual shopping mall is registered in the selling product table. In other words, of the information on the products, information that depends on a shop selling the products is stored in the selling product table. The selling product table illustrated in FIG. 5 includes a "Shop ID" field, a "Product ID" field, a "Price" field, a "Product Page" field, an "Advertisement Flag" field, an "Advertisement Data" field, and a "Browsing History" field.

Identification information for uniquely identifying a shop (shop ID) is registered in the "Shop ID" field. Detailed information on a shop is registered in a shop table (not shown). Product ID of product to be sold in a shop is registered in the "Product ID" field. The selling product table illustrated in FIG. 5 shows that products having the product ID of "G0001" are sold in two shops respectively having the shop ID of "S001" and the shop ID of "S002". The sales price of product is registered in the "Price" field.

Information indicating product page data is registered in the "Product Page" field. For example, the URL of the product page data is registered in the "Product Page" field. Flag information (advertisement flag) indicating whether a shop selling the product wishes to provide an advertisement of the product is registered in the "Advertisement Flag" field. For example, a value of "0" or "1" is registered in the "Advertisement Flag" field. The value of "0" indicates that the shop does not wish to provide the advertisement, and the value "1" indicates that the shop wishes the advertisement. Data for displaying an advertisement in the advertisement area 28 is registered in the "Advertisement Data" field. Information on the browsing history of the product screen (product page) is registered in the "Browsing History" field. For example, the history of dates on which product page data has been transmitted to the user terminal 6 is registered in the "Browsing History" field.

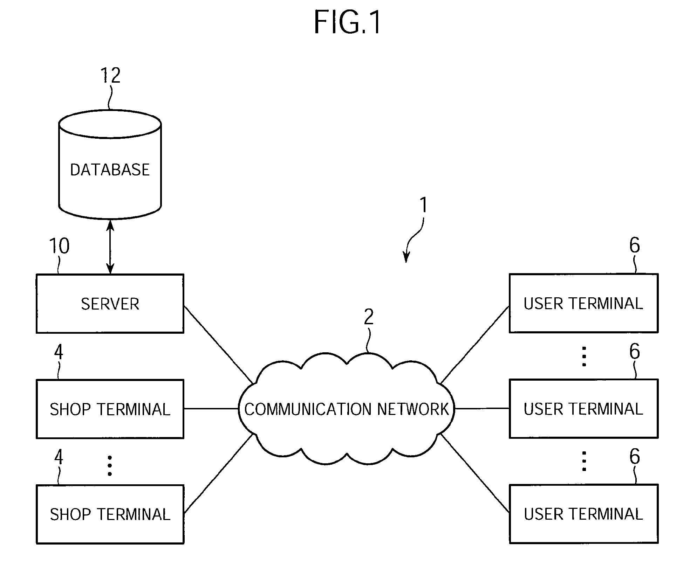

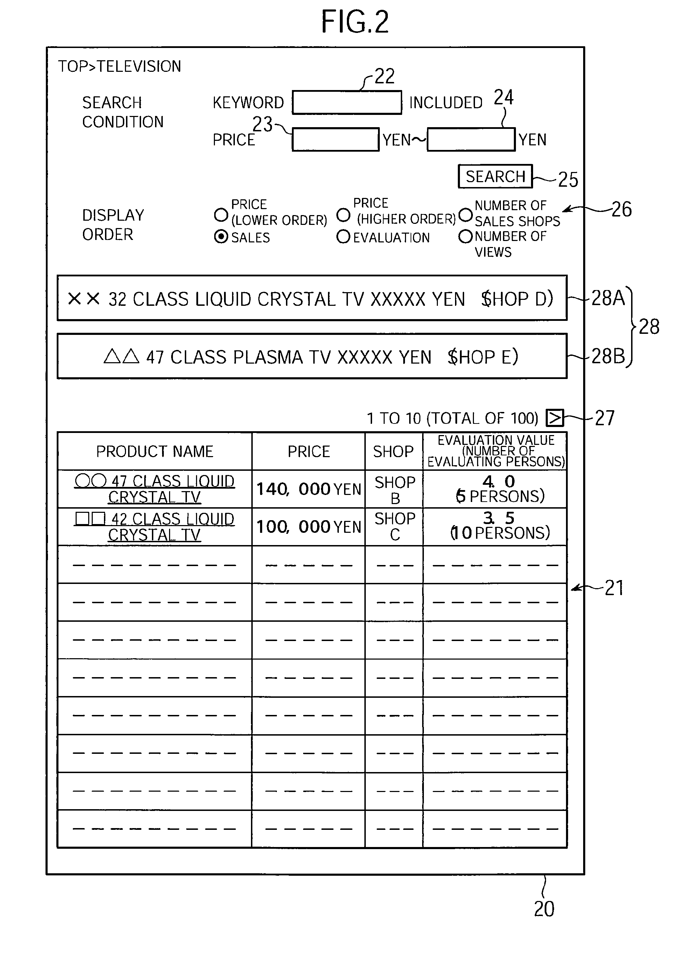

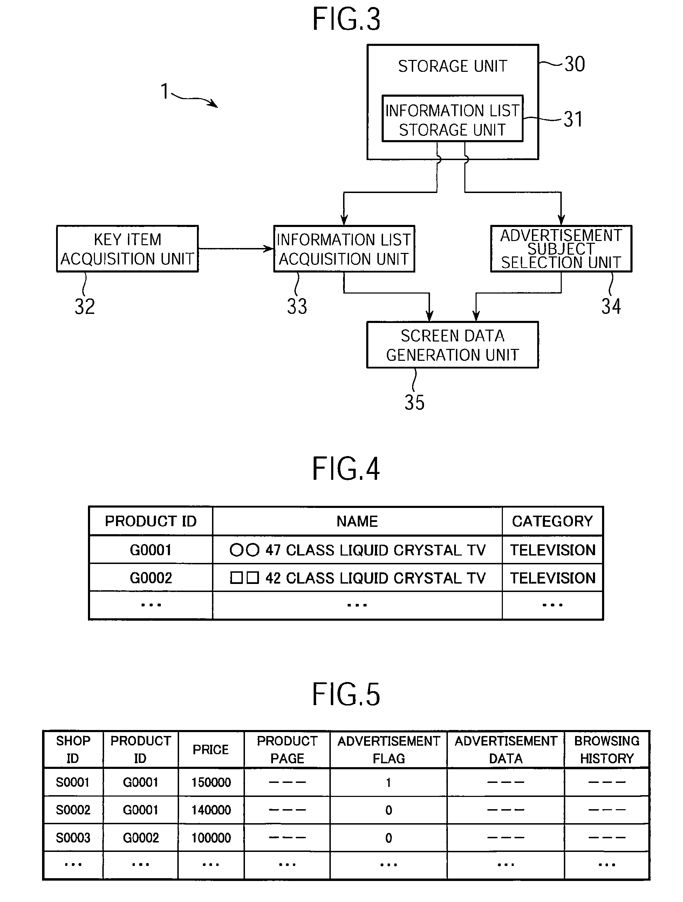

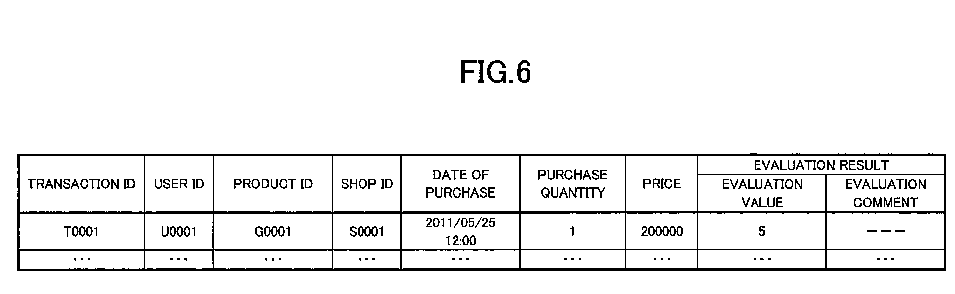

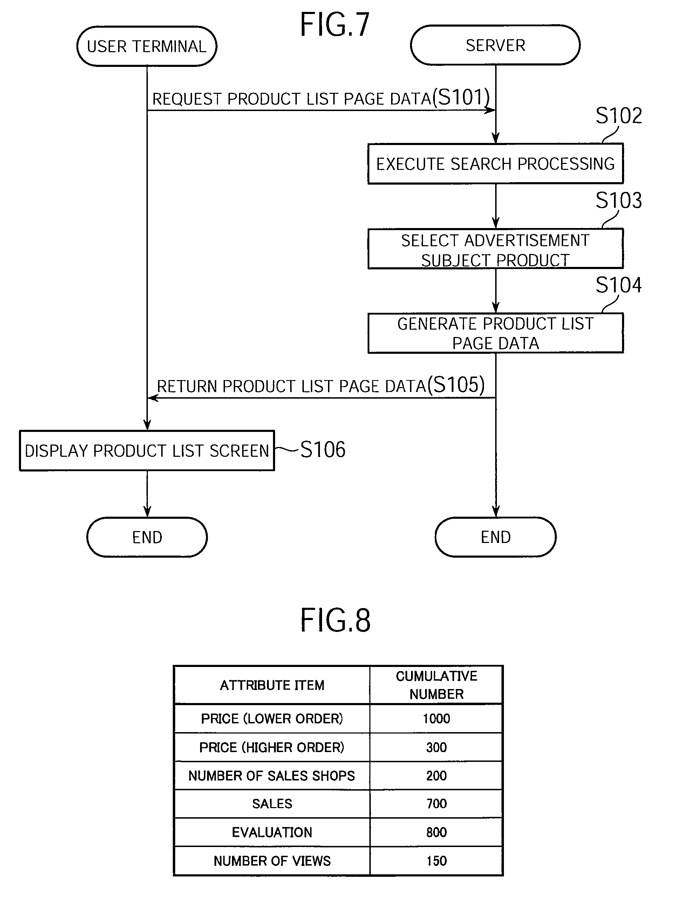

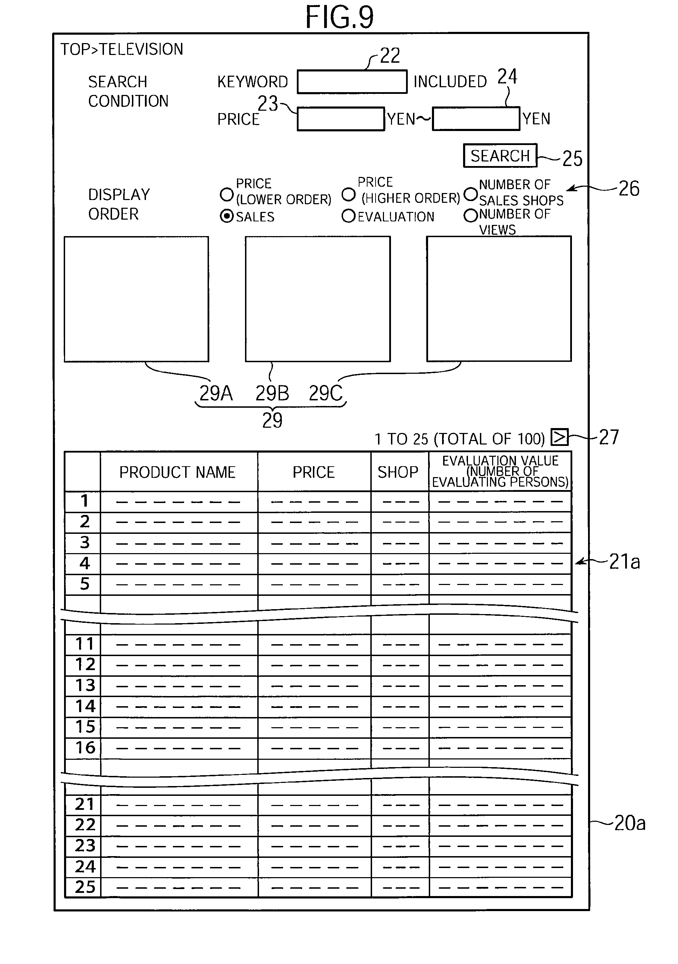

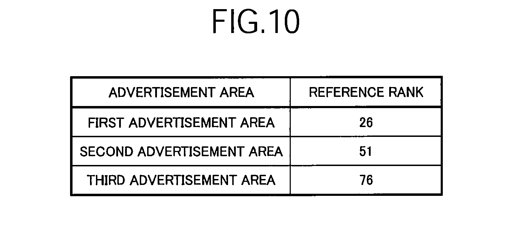

FIG. 6 illustrates an example of a purchase history table. A product purchase history for each user is registered in the purchase history table. The purchase history table illustrated in FIG. 6 includes a "Transaction ID" field, a "User ID" field, a "Product ID" field, a "Shop ID" field, a "Date of Purchase" field, a "Purchase Quantity" field, an "Amount" field, and a "Evaluation Result" field.

Identification information for uniquely identifying the transaction (transaction ID) is registered in the "Transaction ID" field. User ID of the user who purchased the product is registered in the "User ID" field. The user ID is identification information for uniquely identifying an individual user. Product ID of the product that has been purchased by the user is registered in the "Product ID" field. Shop ID of the shop where the user has purchased the product is registered in the "Shop ID" field.

The date on which the user has purchased the product is registered in the "Date of Purchase" field. The quantity of product purchased by the user is registered in the "Quantity" field. The price that the user has paid to the shop is registered in the "Amount" field. The results of evaluating the purchased product by the user is registered in the "Evaluation Result" field. The "Evaluation Result" field includes a "Evaluation Value" field and a "Evaluation Comment" field. The evaluation value input by the user (for example, an integer of 1 to 5) is registered in the "Evaluation Value" field. The comment input by the user is registered in the "Evaluation Comment" field. The evaluation value and the evaluation comment are registered by the users who purchased the product, in consideration for the results of actually using the product.

The key item acquisition unit 32 will be described. The key item acquisition unit 32 acquires an attribute item selected by a user as a key item in the case of sorting the list of information. The key item is selected by the user from among a plurality of attribute items.

In the case of this embodiment, a plurality of attribute items relating to the attributes of the product correspond to "a plurality of attribute items" mentioned above. Specifically, the attribute items which are selectable as key items in the display order selection field 26, "Price (lower order)", "Price (higher order)", "Number of Sales Shops", "Sales", "Evaluation", and "Number of Views", correspond to "a plurality of attribute items" mentioned above. In the case of this embodiment, the key item acquisition unit 32 acquires an attribute item selected as a key item by the user in the display order selection field 26 of the product list screen 20.

The information list acquisition unit 33 will be described. The information list acquisition unit 33 acquires all or part of the list of information stored in the information list storage unit 31. In the case of this embodiment, the information list acquisition unit 33 acquires all or part of the list of products stored in the information list storage unit 31.

For example, the information list acquisition unit 33 acquires a list of products belonging to the category that is specified by the user.

For example, when the category specified by the user is "Television", the information list acquisition unit 33 acquires the list of products belonging to the category "Television". In this case, the information list acquisition unit 33 can be regarded to acquire a list of products belonging to the category "Television" from a list of products of all the categories stored in the information list storage unit 31. That is, the information list acquisition unit 33 can be regarded to acquire part of the list of products of all the categories stored in the information list storage unit 31. In this case, the information list acquisition unit 33 can also be regarded to acquire the entire list of products of the category "Television" stored in the list information storage unit 31.

Further, for example, the information list acquisition unit 33 acquires a list of products that belong to the category specified by the user and satisfy the refining condition input by the user.

For example, when the category specified by the user is "Television", the information list acquisition unit 33 acquires a list of products that satisfy the refining condition input by the user from among the list of products belonging to the category "Television". In this case, the information list acquisition section 33 can be regarded to acquire a list of products that belong to the category "Television" and satisfy the refining condition input by the user from among the list of products of all the categories that are stored in the information list storage unit 31. Alternatively, in this case, the information list acquisition unit 33 can be regarded to acquire a list of products that satisfy the refining condition input by the user from among a list of products that belong to the category "Television". That is, the information list acquisition unit 33 can also be regarded to acquire part of the list of products of the category "Television" stored in the list information storage unit 31.

The advertisement subject selection unit 34 will be described. The advertisement subject selection unit 34 selects at least one piece of information of a plurality of pieces of information contained in the list of information stored in the list information storage unit 31, as an advertisement subject. In the case of this embodiment, the advertisement subject selection unit 34 selects at least one product contained in the list of products stored in the information list storage unit 31 as an advertisement subject. As described below, an advertisement relating to the product that is selected as an advertisement object is displayed in the advertisement area 28 of the product list screen 20. Therefore, the "advertisement subject" means the product whose advertisement should be displayed in advertisement area 28.

For example, the advertisement subject selection unit 34 selects at least one of the products contained in the product list acquired by the information list acquisition unit 33 as an advertisement subject. Specifically, when the list of products that are acquired by the information list acquisition unit 33 is a list of products belonging to the category specified by the user, the advertisement subject selection unit 34 selects at least one product having the advertisement flag of "1" from among the products contained in the list. Alternatively, the list of products that are acquired by the information list acquisition unit 33 is a list of products belonging to the category "Television" and satisfying the refining condition specified by the user, the advertisement subject selection unit 34 selects at least one product having the advertisement flag of "1" from among the products contained in the list.

Before describing the details of the operation of the advertisement subject selection unit 34, the screen data generation unit 35 will be described. The screen data generation unit 35 generates screen data of a screen including an advertisement area for displaying an advertisement of information selected as an advertisement subject by the advertisement subject selection unit 34, and a list area for displaying all or part of the list of information acquired by the information list acquisition unit 33.

In the case of this embodiment, the product list screen 20 corresponds to the above-mentioned "screen". In other words, the screen data generation unit 35 generates screen data of the product list screen 20 (product list page data). As described above, the product list screen 20 includes the list area 21 and the advertisement area 28.

All or part of the list of products that are acquired by the information list acquisition unit 33 is displayed in the list area 21. For example, when the number of products contained in the list of products acquired by the information list acquisition unit 33 is less than or equal to the maximum number of products displayable in the list area 21, all of the list of products acquired by the information list acquisition unit 33 is displayed in the list area 21. On the other hand, when the number of products contained in the list of products acquired by the information list acquisition unit 33 is greater than the maximum number of products displayable in the list area 21, part of the list of products acquired by the information list acquisition unit 33 is displayed in the list area 21.

When the attribute item specified as the key item by the user is acquired by the key item acquisition unit 32, all or part of the list of information acquired by the information list acquisition unit 33 is displayed in the list area 21 in a sorted state with the attribute item acquired by the key item acquisition unit 32 being used as the key item.

An advertisement of a product selected as the advertisement subject by the advertisements target selecting section 34 is displayed in the advertising area 28. For example, two products are selected as advertisement subjects by the advertisement subject selection unit 34. An advertisement of one of the two products is displayed in the first advertisement area 28A, and an advertisement of the other product is displayed in the second advertisement area 28B.

If a plurality of advertisement areas are included in the screen and plurality of products are selected as advertisement subjects by the advertisement subject selection unit 34, the screen data generation unit 35 may decide which product advertisement should be displayed in which advertisement area, as described below. In other words, with respect to each product, the screen data generation unit 35 may decide one of a plurality of advertisement areas as the advertisement area where advertisement corresponding to the product should be displayed, based on the sort order of the a plurality of products and the positions of the plurality of advertisement areas.

When two products selected as advertisement subjects by the advertisement subject selection unit 34 include a first product and a second product having a rank (sort number) lower than that of the first product, the screen data generation unit 35 may display an advertisement corresponding to the second product in the first advertisement area 28A, and an advertisement corresponding to the first product in the second advertisement area 28B.

In other words, the screen data generation unit 35 may display an advertisement corresponding to the second product having a lower rank in the first advertisement area 28A (i.e., the outstanding first advertisement area 28A). The screen data generation unit 35 may display an advertisement corresponding to the first product having a higher rank in the second advertisement area 28B (i.e., the second advertisement area 28B which does not stand out). In this way, an advertisement of a product which is less likely to be spotted by the user in the list area 21 (secondproduct) isdisplayed in the advertisement area which is more appealing (first advertisement area 28A). As a result, the advertisement of a product which is less likely to be spotted by the user in the list area 21 is made easier to catch the eye of the user.

The screen data generation unit 35 transmits the generated screen data to the user terminal 6. The product list screen 20 is displayed on the display unit of the user terminal 6 based on the received screen data. That is, the screen data generation unit 35 transmits the generated screen data to the user terminal 6 to display a screen based on the screen data (i.e., product list screen 20) on the display unit of the user terminal 6.

The operation of the advertisement subject selection unit 34 according to this embodiment will be described in detail. The advertisement subject selection unit 34 decides whether to select information as the advertisement subject based on the rank of information in case of sorting all or part of a list of information stored in the information list storage unit 31 in a certain order.

As described above, in the case of this embodiment, a list of products correspond to the above-mentioned the "list of information". The advertisement subject selection unit 34 decides whether to select a product as the advertisement subject based on the rank of the product in case of sorting all or part of the list of products stored in the information list storage unit 31 in a certain order.

Here, the "certain order" is, for example, the same sort order as the sort order for a list of products to be displayed in the list area 21. The "all or part of the list of products stored in the information list storage unit 31" is, for example, the "list of products acquired by the information list acquisition unit 33".

That is, when all or part of the list of products acquired by the information list acquisition unit 33 is displayed in a sorted state in a certain sort order, the advertisement subject selection unit 34 decides whether to select a product as an advertisement subject based on the rank of the product in the case of sorting the list of products acquired by the information list acquisition unit 33 in the same sort order.

It is assumed that, for example, the list of information acquired by the information list acquisition unit 33 is the list of products belonging to the category "Television". It is further assumed that the list of products is displayed in the list area 21 in a state where the list of products is sorted in the ascending order of prices.

In this case, the advertisement subject selection unit 34 decides whether to select a product having the product ID of "G0001" as the advertisement subject based on the rank of the product in the case of sorting the list of products belonging to the category "Television" in the ascending order of prices.

For example, the advertisement subject selection unit 34 determines whether or not the rank of the product is higher than a reference rank. Then, when it is determined that the rank of the product is higher than the reference rank, the advertisement subject selection unit 34 does not select the product as the advertisement subject.

The case where "the rank is higher than the reference rank" is the case where a numeral indicating the rank (for example, "1" when the rank is the first rank) is smaller than a numeral indicating the reference rank.

Further, the "reference rank" is set, for example, as follows. That is, when the maximum number of products displayable in the list area 21 is "N", "N+1" is set to the reference rank. In other words, the advertisement subject selection unit 34 determines whether or not the rank of a product is higher than "N+1". When the rank of the product is higher than "N+1", i.e., when the rank of the product is one of the first rank to the N-th rank, the advertisement subject selection unit 34 does not select the product as the advertisement subject. In other words, even when the advertisement flag of the product is "1", the advertisement subject selection unit 34 does not select the product as the advertisement subject.

In this way, when a product is displayed on the first page of the product list pages, the product is no longer selected as the advertisement subject, and an advertisement of the product is no longer displayed in the advertisement area 28. The case where a product is displayed on the first page of the product list pages is the case where a product to be displayed in the list area 21 easily catches the eye of the user. In such a case, the necessity of providing the advertisement of the product is low. In this case, the use of the above-mentioned scheme prevents the advertisement from being provided. That is, the advertisement is efficiently provided.

The "reference rank" is not limited to "N+1" which is one added to the maximum number of products displayable in the list area 21. For example, if the maximum number of products displayable in the list area 21 is relatively large, a value smaller than the value "N+1" may be set as the "reference rank". If the maximum number of products displayable in the list area 21 is relatively large (for example, if the maximum number is 100), even if a product is displayed on the first page of the product list pages, the product may not easily catch the eye of the user. When products having any one of the 81th to 100th ranks do not easily catch the eye of the user, the "reference rank" may be set to, for example, "81" or the like. That is, the "reference rank" may be set in consideration of the rank that allows product to easily catch the eye of the user.

The key item acquisition unit 32, the information list acquisition unit 33, the advertisement subject selection unit 34, and the screen data generation unit 35 which are described above may be implemented by the control unit of the server 10 executing processing according to the program. FIG. 7 is a flow diagram illustrating an example of the processing executed by the control unit of the server 10 to implement the above-mentioned functional blocks. The control unit of the server 10 executes the processing illustrated in FIG. 7 according to the program, thereby functioning as the above-mentioned functional blocks.

FIG. 7 illustrates processing that is executed when the search button 25 of the product list screen 20 is selected, or when the display order is specified in the display order selection field 26.

When the search button 25 of the product list screen 20 is selected, or when the display order is specified in the display order selection field 26, as illustrated in FIG. 7, the control unit of the user terminal 6 requests product list page data (S101). That is, the control unit transmits an HTTP request indicating a request for product list page data to the server 10.

Information on the category specified by the user and information about the contents input in the keyword input field 22 and the price input field 23, 24 are associated with the HTTP request as information on the search condition. Those pieces of information are transmitted to the server 10. In addition, information on an attribute item selected as a key item in the display order selection field 26 is also associated with the HTTP request. This information is also transmitted to the server 10.

The control unit of the server 10 receives the HTTP request transmitted from the user terminal 6. The control unit also receives the search condition (for example, category, keyword and price). Further, thecontrolunit (key item acquisition unit 32) alsoreceives a key item for sorting. Then, the control unit (list information acquisition unit 33) executes search processing (S102). That is, the control unit acquires a list of products that satisfy the search condition (for example, category, keyword and price) and that are sorted with the key item.

The value of an attribute item which is selected as a sorting key item is acquired based on the selling product table or the transaction history table. For example, the "Number of Sales Shops" for each product is acquired based on the selling product table. Further, the "Sales" for each product is acquired based on the transaction history table. Further, the "Evaluation" is acquired based on the "Evaluation Value" field of the transaction history table. Furthermore, the "Number of Views" for each product is acquired based on the "Browsing History" field of the selling product table.

After the process in Step S102 is executed, the control unit (advertisement subject selection unit 34) selects an advertisement subject product (a product to be advertised) (S103). For example, the control unit decides, as advertisement subjects, two of the products that satisfy all of the following three conditions (a) to (c).
(a) The product is contained in the list of products acquired in Step S102.
(b) The advertisement flag is "1".
(c) The rank (sort number) is not higher than the reference rank (reference number).

In other words, the control unit does not select, as the advertisement subject, a product that is not contained in the list of products acquired in Step S102. Further, the control unit does not select, as the advertisement subject, a product whose advertisement flag is not "1". Furthermore, the control unit does not select, as the advertisement subject, a product having the rank higher than the reference rank.

When the number of products that satisfy all of the three conditions (a) to (c) is greater than the number of the advertisement areas provided on the product list screen 20 ("2" in the example illustrated in FIG. 2), the control unit (the advertisement subject selection unit 34) may select advertisement subjects from among products that satisfy all of the three conditions (a) to (c), as described below. The following will describe three examples regarding the method of selecting advertisement subjects from among products that satisfy all of the three conditions (a) to (c).
(1) For example, the advertisement subject selection unit 34 may select advertisement subjects based on the rank of each product that satisfies all of the above-mentioned three conditions (a) to (c) . Specifically, the advertisement subject selection unit 34 may select a product whose rank is low as priority as the advertisement subject. In case of selecting two advertisement subjects, for example, the advertisement subject selection unit 34 may select a product having the lowest rank and a product having the second lowest rank from among the products that satisfy all of the above-mentioned three conditions (a) to (c), as the advertisement subjects. This scheme can permit a product having a lower rank (i.e., a product which does not easily catch the eye of the user) to be advertised as priority.
(2) The advertisement subject selection unit 34 may select the advertisement subject based on advertisement expense (or advertisement unit cost) of each product that satisfies all of the above-mentioned three conditions (a) to (c). The "advertising expense" means the expense that an advertiser (a shop selling the product) pays for the advertisement of a product, and the "advertisement unit cost" means the cost for advertisement for a predetermined number of times or a predetermined time.

Specifically, the advertisement subject selection unit 34 may select, as the advertisement subject, a product whose advertisement expense (or advertisement unit price) is high as priority. In case of selecting two advertisement subjects, for example, the advertisement subject selection unit 34 may select a product having the highest advertisement expense (or advertisement unit price) and a product having the second highest advertisement expense (or advertisement unit price) from among the products that satisfy all of the above-mentioned three conditions (a) to (c), as the advertisement subjects. This scheme is advantageous for the provider of the virtual shopping mall in that an increase in advertising revenue is expected.

In the case of implementing the above-mentioned processing for selecting the advertisement subject, it is necessary to store information on the advertisement expense (or advertisement unit price) in association with each product in the storage unit 30. For example, an "Advertisement Expense" field (or "Advertisement Unit Price" field) for registering the advertisement expense (or advertisement unit price) needs to be added to the selling product table.
(3) The advertisement subject selection unit 34 may select the advertisement object based on the advertisement budget balance for each product that satisfies all of the above-mentioned three conditions described above (a) to (c). The "advertisement budget balance" refers to the balance of the budget planed for advertisements by an advertiser (a shop that sells the product). That is, the "advertisement budget balance" refers to money obtained by subtracting the amount of money already spent for advertisements from the budget planed for advertisements.

Specifically, the advertisement subject selection unit 34 may select, as the advertisement subject, a product whose advertisement budget balance is high as priority. In case of selecting two advertisement subjects, for example, the advertisement subject selection unit 34 may select a product having the highest advertisement budget balance and a product having the second highest advertisement budget balance from among the products that satisfy all of the above-mentioned three conditions (a) to (c), as the advertisement subjects. In this way, it is possible to expend the advertisement budget of the advertiser smoothly.

In the case of implementing the above-mentioned processing for selecting the advertisement subject, it is necessary to store information on the advertisement budget balance in association with each product in the storage unit 30. For example, an "Advertisement Budget Balance" field for registering the advertisement budget balance needs to be added to the selling product table.

Instead of storing the advertisement budget balance for each product, the advertisement budget balance may be stored for each advertiser (each shop). That is, information on the advertisement budget balance may be stored in association with each advertiser (each shop). In this case, the advertisement subject selection unit 34 may select a product having a larger advertisement budget balance as the advertisement subject as priority. In case of selecting two advertisement subjects, for example, the advertisement subject selection unit 34 may select a product having the largest advertisement budget balance and a product having the second largest advertisement budget balance from among the products that satisfy all of the above-mentioned three conditions (a) to (c), as the advertisement subjects.

After executing the processing in Step S103, the control unit (screen data generation unit 35) generates product list page data based on the results of the processing in Steps S102 and S103 (S104). The product list page data is set in such a way that a list of products having the rank higher than the reference rank of the list of products acquired in Step S102 is displayed in the list area 21. Further, the product list page data is set in such a way that the advertisement of one of the two products selected in Step S103 is displayed in the first advertisement area 28A, and the advertisement of the other product is displayed in the second advertisement area 28B.

The control unit returns the product list page data generated in Step S104 to the user terminal 6 (S105). The user terminal 6 receives the product list page data, and displays the product list screen 20 on the display unit based on the product list page data (S106). The above completes the description of the process illustrated in FIG. 7.

According to the e-commerce system 1 described above, when a product displayed in the list area 21 of the product list screen 20 easily catches the eye of the user, an advertisement of the product is not provided. In other words, only when a product displayed in the list area 21 of the product list screen 20 does not easily catch the eye of the user, an advertisement of the product is provided. The e-commerce system 1 can efficiently provide the advertisement.

The present invention is not limited to the embodiment described above.
[1] For example, in the above-mentioned embodiment, the advertisement subject selection unit 34 decides whether to select a product as an advertisement subject based on the rank of the product in the case where all or part of the list of products stored in the information list storage unit 31 is sorted in a certain order. Further, the "certain order" is described as the same sort order as the list of products displayed in the list area 21. However, the "certain order" may be a sort order different from that of the list of products displayed in the list area 21.
   [1-1] For example, the above-mentioned "certain order" may be a sort order in the case where sorting is performed with a predetermined attribute item of a plurality of attribute items used as the key item. That is, the advertisement subject selection unit 34 may decide whether to select a product as the advertisement subject based on the rank of the product when all or part of the list of products stored in the information list storage unit 31 is sorted using as the key item a predetermined attribute item.

Here, the "predetermined attribute item" is an attribute item previously selected by the provider of the e-commerce system 1. For example, the provider of the e-commerce system 1 sets, as the "predetermined attribute item", an attribute item which is selected a larger number of times or frequently. As described above, in the case of this embodiment, "Price (lower order)", "Price (higher order)", "Number of Sales Shops", "Sales", "Evaluation", and "Number of Views" which are attribute items selectable in the display order selection field 26 of the product list screen 20 correspond to the above-mentioned "plurality of attribute items". For example, "Price (lower order)" which seems to be selected by users a larger number of times or frequently is set as the "predetermined attribute item".

In this case, the advertisement subject selection unit 34 determines whether or not the rank of a product is higher than the reference rank. When it is determined that the rank of the product is higher than the reference rank, the advertisement subject selection unit 34 does not select the product as the advertisement subject.

In the case where the list of products is sorted using as the key item an attribute item which seems to be selected by a user a larger number of times or frequently, it is considered that a product having a high rank catches the eye of the user. Therefore, it is considered that the necessity of providing an advertisement of such a product is low. According to the above-mentioned scheme, the advertisement is not provided when the necessity of providing an advertisement is low. As a result, the advertisement is efficiently performed.

It should be noted that a plurality of attribute items may correspond to the above-mentioned "predetermined attribute item". Then, a product, which has a high rank in the case where a list of products is sorted using any one of those attribute items as the key item, may not be selected as the advertisement subject.
[1-2] For example, at least one of a plurality of attribute items may be selected based on the number of selections or the frequency of selections of each of the plurality of attribute items as a key item, and the above-mentioned "certain order" may be set as the sort order in the case where the sorting is performed using the selected attribute item as the key item.

In this case, the storage unit 30 (selection information storage unit) stores selection information on the number of selections or the frequency of selections of each of the plurality of attribute items as the key item. FIG. 8 illustrates an example of a selection frequency table stored in the storage unit 30. The cumulative number of selections of each of attribute items selectable as the key item in the display order selection field 26 of the product list screen 20 is stored in association with each of the selectable attribute items, in the selection frequency table illustrated in FIG. 8.

Instead of storing the selection frequency table as illustrated in FIG. 8, information on the history of dates on which each of attribute items is selected as the key item may be stored. The number of selections of each attribute item as the key item within a predeterminedperiod (for example, recent one week) maybe calculated based on the history.

The advertisement subject selection unit 34 (consideration subject selection means) selects at least one of a plurality of attribute items as a subject of consideration based on the above-mentioned selection information.

For example, the advertisement subject selection unit 34 does not select an attribute item whose number of selections or frequency of selections as the key item is smaller than a predetermined threshold, as the subject of consideration. Alternatively, the advertisement subject selection unit 34 may select an attribute item whose number of selections or frequency of selections is greater than a predetermined threshold, as the subject of consideration. Alternatively, the advertisement subject selection unit 34 may select an attribute item whose number of selections or frequency of selections is the highest, as a subject of consideration. Alternatively, the advertisement subject selection unit 34 may select attribute items each having the highest number of selections or frequency of selections to the i-th (i: integer of 2 or greater) highest number of selections or frequency of selections, as subjects of consideration.

In this case, the advertisement subject selection unit 34 decides whether or not a product is to be selected as the advertisement subject based on the rank of that product in the case where all or part of the list of products stored in the information list storage unit 31 is sorted using as the key item the attribute item selected as the subject of consideration.

In this case, the advertisement subject selection unit 34 determines whether or not the rank of a product is higher than the reference rank. Then, when it is determined that the rank of the product is higher than the reference rank, the advertisement subject selection unit 34 does not select the product as the advertisement subject.

In the case where the list of products is sorted using as the key item an attribute item which is actually selected a larger number of times or frequently, it is considered that a product having a high rank catches the eye of the user. Therefore, it is considered that the necessity of providing an advertisement of such a product is low. According to the above-mentioned scheme, an advertisement is not provided when the necessity of providing the advertisement is low. As a result, the advertisement is efficiently performed.

By the way, when a plurality of attribute items are selected as subjects of consideration, a product, which has a high rank in the case where a list of products is sorted using any one of those attribute items, may not be selected as the advertisement subject.
[2] Further, for example, the advertisement subject selection unit 34 may also execute processing as described below.

Here, it is assumed that a product list screen 20a as illustrated in FIG. 9 is displayed. The product list screen 20a illustrated in FIG. 9 has a first advertisement area 29A, a second advertisement area 29B, and a third advertisement area 29C provided above a list area 21a.

In this case, the storage unit 30 stores a condition on the rank in association with each of the first advertisement area 29A, the second advertisement area 29B and the third advertisement area 29C. The "condition on the rank" is a condition indicating a product which should not be selected as the advertisement subject.

FIG. 10 illustrates an example of a reference rank table stored in the storage unit 30 in this case. In the reference rank table illustrated in FIG. 10, a reference rank is stored in association with each of the first advertisement area 29A, the second advertisement area 29B and the third advertisement area 29C. The reference rank corresponds to the above-mentioned "condition".

In the reference rank table illustrated in FIG. 10, different reference ranks is stored in association with the first advertisement area 29A, the second advertisement area 29B and the third advertisement area 29C. Specifically, "26" is set as the reference rank corresponding to the first advertisement area 29A. Further, "51" is set as the reference rank corresponding to the second advertisement area 29B. That is, a rank lower than the reference rank corresponding to the first advertisement area 29A is set as the reference rank corresponding to the second advertisement area 29B. Furthermore, "76" is set as the reference rank corresponding to the third advertisement area 29C. That is, a rank lower than the reference rank corresponding to the second advertisement area 29B is set as the reference rank corresponding to the third advertisement area 29C.

In deciding whether or not a product is to be selected as the advertisement subject corresponding to the first advertisement area 29A, the advertisement subject selection unit 34 determines whether or not the rank of the product satisfies the above-mentioned condition associated with the first advertisement area 29A. Specifically, the advertisement subject selection unit 34 determines whether or not the rank of the product is higher than the reference rank associated with the first advertisement area 29A. When the rank of the product is higher than the reference rank associated with the first advertising area 29A, the advertisement subject selection unit 34 does not select the product as the advertisement subject corresponding to the first advertising area 29A. In other words, the advertisement subject selection unit 34 does not display an advertisement of the product in the first advertisement area 29A.

In this case, in Step S103 in FIG. 7, for example, one of the products that satisfy all of the following three conditions (a) to (c) is decided as an advertisement subject corresponding to the first advertisement area 29A.
(a) The product is contained in the list of products acquired in Step S102.
(b) The advertisement flag is "1".
(c) The rank is not higher than the reference rank associated with the first advertising area 29A.

The advertisement subject selection unit 34 likewise executes similar processing with respect to the second advertisement area 29B and the third advertisement area 29C.

In the example described above, an advertisement of a product having any one of "26" to "50" as a rank is displayed in only the first advertisement area 29A. By way of contrast, an advertisement of a product having any one of "51" to "75" as a rank may be displayed in any one of the first advertisement area 29A and the second advertisement area 29B. In addition, an advertisement of a product having a rank lower than "76" may be displayed in any one of the first advertisement area 29A, the second advertisement area 29B and the third advertisement area 29C. In general, a product having a lower rank is less likely to catch the eye of the user, and therefore needs to be advertised more. In this regard, the above-mentioned scheme makes it likely to display an advertisement of a product having a lower rank. That is, it is possible to efficiently provide an advertisement. It should be noted that the number of advertisement areas set on the product list screen 20a illustrated in FIG. 9 is not limited to three, and may be two, or four or more.
[3] For example, when it is determined that the rank of a product is higher than the reference rank, or the like, the advertisement subject selection unit 34 may execute processing as described below, instead of preventing the product from being selected as the advertisement subject.

For example, the advertisement subject selection unit 34 decides whether or not a product is to be selected as the advertisement subject based on probability information. The advertisement subject selection unit 34 sets this probability information based on the result of determining whether or not the rank of the product is higher than the reference rank.

That is, the advertisement subject selection unit 34 sets the probability information in such a way that the probability at which the product is selected as the advertisement subject when the rank of the product is determined as higher than the reference rank becomes lower than the probability at which the product is selected as the advertisement subject when the rank of the product is not determined as higher than the reference rank.

In other words, the advertisement subject selection unit 34 sets the probability at which the product is selected as the advertisement subject to a first probability, when it is not determined that the rank of the product is higher than the reference rank. The advertisement subject selection unit 34 sets the probability at which the product is selected as the advertisement subject to a second probability lower than the first probability, when it is determined that the rank of the product is higher than the reference rank.

Even with such setting, when a product displayed in the list area 21 easily catches the eye of the user, an advertisement of the product is less likely to be provided. That is, it is possible to achieve efficient advertising.
[4] For example, the server 10 (advertisement-charge determination means) may decide the amount of charge of advertisement relating to a product (information) based on the number of times an advertisement of the product (information) is displayed in the advertisement area 28 (or advertisement area 29), or the frequency of display of the advertisement of the product (information) in the advertisement area 28 (or advertisement area 29).

In this case, the storage unit 30 stores the number of times the advertisement of each product is displayed in the advertisement area 28 (or advertisement area 29), or the frequency of display of the advertisement of each product in the advertisement area 28 (or advertisement area 29). For example, an "Advertisement History" field is added to the selling product table. A history of the display of an advertisement of a product in the "Advertisement History" field. That is, the history of the dates on which the advertisement of the product is displayed in the advertisement area 28 (or advertisement area 29) is stored in the storage unit 30.

Based on the content of the "Advertisement History" field, the server 10 acquires the cumulative number of times an advertisement of a product (information) is displayed in the advertisement area 28 (or advertisement area 29), or the number of times the advertisement of the product (information) in the advertisement area 28 (or advertisement area 29) in a predetermined period (recent one month). Then, based on the acquisition result, the server 10 decides the amount of charge of advertisement for a shop (advertiser). In other words, the server 10 decides the amount of charge of advertisement for a shop based on information representing the correlation between the amount of charge of advertisement, and one of the number of times an advertisement of a product (information) is displayed and the frequency of display of the advertisement of the product (information).

The calculation of the amount of charge of advertisement may be executed by a server other than the server 10. That is, the calculation of the amount of charge of advertisement may be executed by a dedicated server for the charge of advertisement.
[5] In the e-commerce system 1, not only a product, such as television or the like, but also data such as, for example, electronic book data, music data, video data, or the like, may be sold as a product. Further, in the e-commerce system 1, not only e-commerce between a shop and a consumer but also e-commerce between consumers may be conducted.

Further, in the e-commerce system 1, a service may be provided by a service provider. That is, the present invention may be adapted even when an advertisement of a service is provided.

The present invention can be adapted to a system other than the e-commerce system. In other words, the advertisement system according to the embodiment of the present invention may be implemented in the system other than the e-commerce system.

## Claims

1. An advertising system comprising:
information list acquisition means for acquiring all or part of a list of information stored in information list storage means for storing the list of information;
advertisement subject selection means for selecting at least one piece of information of a plurality of pieces of information contained in the list of information stored in the information list storage means, as an advertisement subject; and
screen data generation means for generating screen data of a screen including an advertisement area for displaying an advertisement of the information selected as the advertisement subject by the advertisement subject selection means, and a list area for displaying the all or part of the list of information acquired by the information list acquisition means,
wherein the advertisement subject selection means decides whether or not the information is to be selected as the advertisement subject, based on a rank of the information in the case where the all or part of the list of information stored in the information list storage means is sorted in a certain order.

2. The advertising system according to claim 1, wherein:
the all or part of the list of information acquired by the information list acquisition means is displayed in the list area in a state where the all or part of the list of information acquired by the information list acquisition means is sorted in the certain order; and
the advertisement subject selection means decides whether or not the information is to be selected as the advertisement subject, based on a rank of the information in the case where the all or part of the list of information acquired by the information list acquisition means is sorted in the certain order.

3. The advertising system according to claim 1, further comprising:
key item acquisition means for acquiring an attribute item selected by a user as a key item from a plurality of attribute items, wherein:
the all or part of the list of information acquired by the information list acquisition means is displayed in the list area in a state where the all or part of the list of information acquired by the information list acquisition means is sorted using as the key item the attribute item acquired by the key item acquisition means, and
the advertisement subject selection means decides whether or not the information is to be selected as the advertisement subject, based on a rank of the information in the case where the all or part of the list of information stored in the information list storage means is sorted using a predetermined attribute item of the plurality of attribute items as the key item.

4. The advertising system according to claim 1, further comprising:
key item acquisition means for acquiring an attribute item selected by a user as a key item from a plurality of attribute items, wherein:
the all or part of the list of information acquired by the information list acquisition means is displayed in the list area in a state where the all or part of the list of information acquired by the information list acquisition means is sorted using as the key item the attribute item acquired by the key item acquisition means ; and
the advertisement subject selection means comprises:
consideration subject selection means for selecting at least one of the plurality of attribute items as a subject of consideration, based on selection information stored in selection information storage means for storing the selection information relating to a number of selections or a frequency of selections of each of the plurality of attribute items as the key item; and
means for deciding whether or not the information is to be selected as the advertisement subject, based on a rank of the information in the case where the all or part of the list of information stored in the information list storage means is sorted using as the key item the attribute item selected as the subject of consideration.

5. The advertising system according to claim 4, wherein
the consideration subject selection means does not select an attribute item whose number of selections or frequency of selections as the key item is smaller than a predetermined threshold, as the subject of consideration.

6. The advertising system according to claim 1, wherein
the advertisement subject selection means comprises means for determining whether or not the rank of the information is higher than a reference rank, and does not select the information as the advertisement subject in the case where the rank of the information is higher than the reference rank.

7. The advertising system according to claim 1, wherein
the advertisement subject selection means includes:
means for deciding whether or not the information is to be selected as the advertisement subject based on probability information;
means for determining whether or not the rank of the information is higher than a reference rank; and
means for setting the probability information based on a result of determining whether or not the rank of the information is higher than the reference rank, and,
the probability information is set so that a probability at which the information is to be selected as the advertisement subject in the case where the rank of the information is higher than the reference rank becomes lower than a probability at which the information is to be selected as the advertisement subject in the case where the rank of the information is lower than the reference rank.

8. The advertising system according to claim 6 or 7, wherein
a list of information having a rank higher the reference rank, of the list of information acquired by the information list acquisition means, is displayed in the list area as a part of the list of information acquired by the information list acquisition means.

9. The advertising system according to claim 1, wherein
the advertisement subject selection means comprises:
means for acquiring all or part of contents stored in means for storing a condition relating to a rank in association with the advertisement area; and
means for determining whether or not the rank of the information satisfies the condition associated with the advertisement area, and,
the advertisement subject selection means does not select the information as the advertisement subject that corresponds to the advertisement area, in the case where the rank of the information satisfies the condition associated with the advertisement area.

10. The advertising system according to claim 1, wherein
the advertisement subject selection means comprises:
means for deciding whether or not the information is to be selected as the advertisement subject based on probability information;
means for acquiring all or part of contents stored in means for storing a condition relating to a rank in association with the advertisement area;
means for determining whether or not the rank of the information satisfies the condition associated with the advertisement area, and
means for setting the probability information based on a result of determining whether or not the rank of the information satisfies the condition associated with the advertisement area, and
the probability information is set so that a probability at which the information is to be selected as the advertisement subject corresponding to the advertisement area in the case where the rank of the information satisfies the condition associated with the advertisement area becomes lower than a probability at which the information is to be selected as the advertisement subject corresponding to the advertisement area in the case where the rank of the information does not satisfy the condition associated with the advertisement area.

11. The advertising system according to claim 1, further comprising:
advertisement charge deciding means for deciding an amount of charge of an advertisement relating to the information, based on a number of times the advertisement of the information is displayed in the advertisement area, or a frequency of display of the advertisement of the information in the advertisement area.

12. The advertising system according to claim 1, wherein
the advertisement subject selection means selects, as advertisement subjects, a plurality of pieces of information of a plurality of pieces of information contained in the list of information stored in the information list storage means,
the screen includes a first advertisement area and a second advertisement area displayed below the first advertisement area, and
in the case where the plurality of pieces of information selected as the advertisement subjects by the advertisement subject selection means includes first information and second information having a rank lower than that of the first information, the screen data generation means displays an advertisement of the first information in the second advertisement area, and displays an advertisement of the second information in the first advertisement area.

13. Amethod of controlling an advertising system comprising:
an information list acquisition step of acquiring all or part of a list of information stored in information list storage means for storing the list of information;
an advertisement subject selection step of selecting at least one piece of information of a plurality of pieces of information contained in the list of information stored in the information list storage means, as an advertisement subject; and
a screen data generation step of generating screen data of a screen including an advertisement area for displaying an advertisement of the information selected as the advertisement subject by the advertisement subject selection step, and a list area for displaying the all or part of the list of information acquired by the information list acquisition step,
wherein the advertisement subject selection step decides whether or not the information is to be selected as the advertisement subject, based on a rank of the information in the case where the all or part of the list of information stored in the information list storage means is sorted in a certain order.

14. A program for causing a computer to function as:
information list acquisition means for acquiring all or part of a list of information stored in information list storage means for storing the list of information;
advertisement subject selection means for selecting at least one piece of information of a plurality of pieces of information contained in the list of information stored in the information list storage means, as an advertisement subject; and
screen data generation means for generating screen data of a screen including an advertisement area for displaying an advertisement of the information selected as the advertisement subject by the advertisement subject selection means, and a list area for displaying the all or part of the list of information acquired by the information list acquisition means,
wherein the advertisement subject selection means decides whether or not the information is to be selected as the advertisement subject, based on a rank of the information in the case where the all or part of the list of information stored in the information list storage means is sorted in a certain order.

15. A computer-readable information storage medium storing the program according to claim 14.
